# EUROPÄISCHE PATENTSCHRIFT

(11) **EP 2 102 521 B1**
(45) Veröffentlichungstag und Bekanntmachung des Hinweises auf die Patenterteilung: **13.10.2010**
(21) Anmeldenummer: 07846554.9
(22) Anmeldetag: 09.11.2007
(51) Int. Cl.: F16D 55/227

(54) **SCHEIBENBREMSE**
DISK BRAKE
FREIN À DISQUE

(30) Priorität: 09.11.2006 DE 102006053183
(43) Veröffentlichungstag der Anmeldung: 23.09.2009
(73) Patentinhaber: Knorr-Bremse Systeme für Nutzfahrzeuge GmbH, 80809 München (DE)
(72) Erfinder: FISCHER, Rudolf, 85435 Erding (DE); VOGEDES, Ralf, 82515 Wolfratshausen (DE); BABICZ, Markus, 85391 Allershausen (DE); RAFFIN, Christian, 85630 Grasbrunn (DE); PESCHEL, Michael, 82296 Schöngeising (DE); ORGLER, Florian, 80336 München (DE)
(74) Vertreter: Mattusch, Gundula
(86) Internationale Anmeldenummer: PCT/EP2007/009731
(87) Internationale Veröffentlichungsnummer: WO 2008/055695

(56) Entgegenhaltungen:
- WO-A-2004/038249
- WO-A-2005/124179
- DE-A1- 2 946 336
- DE-A1- 10 245 027
- US-A- 4 630 713

## Beschreibung

Die Erfindung betrifft eine Scheibenbremse, insbesondere für ein Nutzfahrzeug, gemäß dem Oberbegriff des Anspruchs 1.

Bei derartigen Scheibenbremsen, die auch unter dem Begriff Schiebesattel-Scheibenbremsen bekannt sind, wird der Bremssattel durch Befestigungselemente an einem fahrzeugseitigen Bremsträger angeschlossen.

Dabei sind Führungsholme üblicherweise durch Verschrauben mit dem Bremsträger verbunden, die andererseits in Gleitlagern des Bremssattels so geführt sind, dass eine axiale Verschiebung des Bremssattels gegenüber dem ortsfesten Bremsträger möglich ist. Während eines der Gleitlager als Festlager mit geringem Gleitspiel ausgebildet ist, fungiert das andere als Loslager, wodurch insbesondere Fertigungstoleranzen ausgeglichen werden.

Um insbesondere radiale Fertigungstoleranzen auszugleichen, ist in der WO 2005/124179 A1, der DE 29 46 336 A1, der US 4 630 713 sowie der WO 2004/038249 A1 jeweils vorgeschlagen im Überdeckungsbereich des Führungsholms mit dem Bremssattel ein radial verformbares elastisches Element vorzusehen.

Neben dem Führungsholm umfasst das Festlager eine fest in den Bremssattel eingepresste Führungshülse, vorzugsweise aus Messing, die zusammen mit dem Bremssattel gleitend auf dem Führungsholm geführt ist.

Da eine spielfreie Gleitlagerung zwischen dem Führungsholm und der Führungshülse in der Praxis jedoch nicht realisierbar ist, bleibt der Bremssattel unter Betriebsbedingungen in gewissem Umfang radial bewegbar, so dass in diesem Fall vielfach Klappergeräusche entstehen, die als störend empfunden werden, vor allem in Fahrzeugen, die zur Personenbeförderung eingesetzt werden.

Darüber hinaus kann es aufgrund der radialen Bewegbarkeit im Festlager zu einem Ausschlagen der Führungshülse kommen, durch das die Betriebssicherheit der gesamten Scheibenbremse beeinträchtigt wird.

Unabhängig von der Art der Gleitlager muss das Festlager zum Schutz vor Korrosion und Schmutz abgedichtet sein. Vielfach gelangen jedoch trotzdem Schmutzpartikel zwischen die Führungshülse und den Führungsholm, was naturgemäß die Gleiteigenschaften insbesondere der aus Messing bestehenden Führungshülse beeinträchtigt.

Der Erfindung liegt daher die Aufgabe zugrunde, eine Scheibenbremse der gattungsgemäßen Art so weiterzuentwickeln, dass mit geringem konstruktiven und fertigungstechnischen Aufwand die Verschleiß- und Rüttelfestigkeit des Festlagers verbessert wird.

Diese Aufgabe wird durch eine Scheibenbremse mit den Merkmalen des Anspruchs 1 gelöst.

Eine in diesem Sinne ausgebildete Scheibenbremse zeichnet sich insbesondere dadurch aus, dass der Führungsholm immer unter leichter Vorspannung gegenüber dem Bremssattel gehalten ist. Dadurch wird zum einen ein Klappern in der Führung verhindert und zum anderen können problemlos Fertigungstoleranzen in der gesamten Baugruppe ausgeglichen werden.

Nach einer vorteilhaften Weiterbildung der Erfmdung ist vorgesehen, den radial elastisch verformbaren Abschnitt des Führungsholms als separates Bauteil herzustellen und zu montieren. Dabei ist dieser Abschnitt als Dämpfungsbuchse ausgebildet, mit einem metallischen Innenmantel, der als Träger für eine elastisch verformbare Schicht, beispielsweise einem Gummi dient, das mit dieser Metallbuchse verpresst ist.

Der Bremssattel bzw. dessen Führungshülse liegt dabei als Gleitlager an der elastischen Schicht gleitbar an, wobei die aufzubringende Schiebekraft durch die Wahl des elastischen Materials, aber auch durch die die Anpresskräfte definierende Dimensionierung, insbesondere des Durchmessers, eingestellt werden kann.

Bei der Einleitung eines entsprechend großen Bremsmomentes wird die elastische Schicht so weit zusammengepresst, dass das Gleitlager am Führungsholm auch außerhalb der elastischen Schicht zur Anlage kommt. Eine Beschädigung der Schicht bzw. der Buchse insgesamt tritt dabei allerdings nicht auf.

Vorzugsweise ist die Dämpfungsbuchse mit axialem Spiel auf dem Führungsholm angeordnet.

Für eine einfache Montage dieser Dämpfungsbuchse ebenso wie zur Einstellung des axialen Spiels ist am Führungsholm eine umlaufende Schulter vorgesehen, an der die Dämpfungsbuchse mit einer Stirnseite anliegt, während eine Verschiebesicherung der Dämpfungsbuchse durch an einen der anderen Stirnseite zugeordneten Verschlussring erzielt wird, der endseitig und zwar auf dem der Bremsscheibe abgewandten Ende des Führungsholms mit diesem verbunden ist.

Üblicherweise erfolgt eine Abdichtung des Gleitlager-Bereichs an dem der Bremsscheibe zugewandten Ende des Führungsholms mittels eines Faltenbalgs, der einerseits am Führungsholm und andererseits am Bremssattel befestigt ist.

Nach einer vorteilhaften Weiterbildung der Erfindung weist die Dämpfungsbuchse in radialer Belastungsrichtung ein progressives Dämpfungsverhalten auf, das bevorzugt über Teilbereiche unterschiedlich ist.

Dazu kann die Dämpfungsbuchse außen- und/oder innenseitig mit parallel und abständig zueinander angeordneten Stegen versehen sein, die jeweils seitliche Begrenzungen für Nuten bilden, wobei die Flanken der Stege in Anlagebereiche münden, an denen sich der Führungsholm abstützt bzw. die an der Führungshülse anliegen.

Zumindest ein Teil der Stege kann dicker und/oder breiter und/oder in ihrem Abstand zueinander unterschiedlich sein. Die Stege können axial, umfänglich oder diagonal verlaufen.

Bei betriebsbedingt auftretenden erhöhten Radialkräften, wie sie beispielsweise beim Befahren von Wegstrecken mit Straßenschäden auftreten, werden die Stege entsprechend zusammengedrückt, so dass sich die Dämpfungsbuchse sprunghaft versteift. Hierdurch entsteht eine Progressionsstufe, die zu einem merkbar verbesserten Dämpfungsverhalten führt, mit der Folge, dass auch in diesen Fällen ein Klappern, wie es durch das Aneinanderschlagen der Führungshülse und des Führungsholms entsteht, weitgehend vermieden wird.

Naturgemäß trägt dies auch zu einer Erhöhung der Standzeit des Festlagers bei, da die Führungshülse und der Führungsholm weniger stark beansprucht werden.

Bevorzugt sind die Breiten der innen liegenden Nuten, die, je nach Erfordernis und Konzeption, gleich groß oder unterschiedlich sind, schmaler als die Nuten auf der Außenseite. Bei entsprechender radialer Beanspruchung können sich die durch die Nuten gebildeten inneren Stege so weit verformen, dass diese mit den Nuten eine geschlossene oder weitgehend geschlossene Fläche im Bereich der wirksamen Radialkräfte bilden.

Im Übrigen sind die Nuten im Querschnitt vorzugsweise bogenförmig gestaltet, während die Stege mit ihren Anlageflächen an die Krümmung der Führungshülse bzw. des Führungsholms angepasst sein können.

Für eine zusätzliche Dämpfung, d.h. Verhinderung der Entstehung von Klappergeräuschen ist nach einem weiteren Gedanken der Erfindung vorgesehen, im Bereich des Faltenbalges einen Dämpfungsring anzuordnen, der an der Innenseite des Faltenbalges mit diesem verbunden ist und den Führungsholm umgreift.

Die Dämpfungsbuchse ebenso wie der Dämpfungsring können problemlos in im Einsatz befindliche Scheibenbremsen eingebaut werden, wozu lediglich der Führungsholm und optional der innere Faltenbalg ausgetauscht werden müssen. Dies erfolgt zweckmäßigerweise bei einem Bremsbelagwechsel.

Wie erwähnt, ist die Dämpfungsbuchse mit axialem Spiel auf dem Führungsholm gelagert. Dabei kann das Spiel durch eine Verstellung des Verschlussringes bestimmt werden, je nachdem wie dieser auf dem Führungsholm positioniert ist.

Vorzugsweise entspricht das axiale Spiel der Dämpfungsbuchse dem halben Lüftspiel, um die Freigängigkeit eines reaktionsseitigen Bremsbelages immer zu gewährleisten.

Weitere vorteilhafte Ausbildungen sind in den Unteransprüchen gekennzeichnet.

Ein Ausführungsbeispiel der Erfindung wird nachfolgend anhand der beigefügten Zeichnungen beschrieben.

Es zeigen:
- Figur 1: einen Teilausschnitt einer erfindungsgemäßen Scheibenbremse in ei- ner geschnittenen Seitenansicht
- Figur 2: den Teilausschnitt nach Figur 1 in einer teilweise geschnittenen Sei- tenansicht
- Figur 3: eine Einzelheit der Scheibenbremse in einer Draufsicht
- Figur 4: die Einzelheit in einer Seitenansicht
- Figur 5: die Einzelheit in einer geschnittenen Seitenansicht
- Figuren 6 und 7: jeweils einen Teilausschnitt der Einzelheit in unterschiedlichen Funk- tionsstellungen.

In den Figuren ist ein Teil einer Scheibenbremse, insbesondere für ein Nutzfahrzeug, dargestellt, mit einem eine nicht gezeigte Bremsscheibe umfassenden Bremssattel 1, der an einem Bremsträger 5 durch zwei Befestigungselemente, bezogen auf die Bremsscheibe, axial verschiebbar befestigt ist.

Dabei weisen die Befestigungselemente jeweils einen mit dem Bremsträger 5 fest verbundenen Führungsholm 3 auf, von denen einer in einem als Loslager und der andere in einem als Festlager ausgebildeten Gleitlager zur axialen Verschiebbarkeit des Bremssattels 1 geführt ist. Im Ausführungsbeispiel ist der Bereich des Festlagers dargestellt.

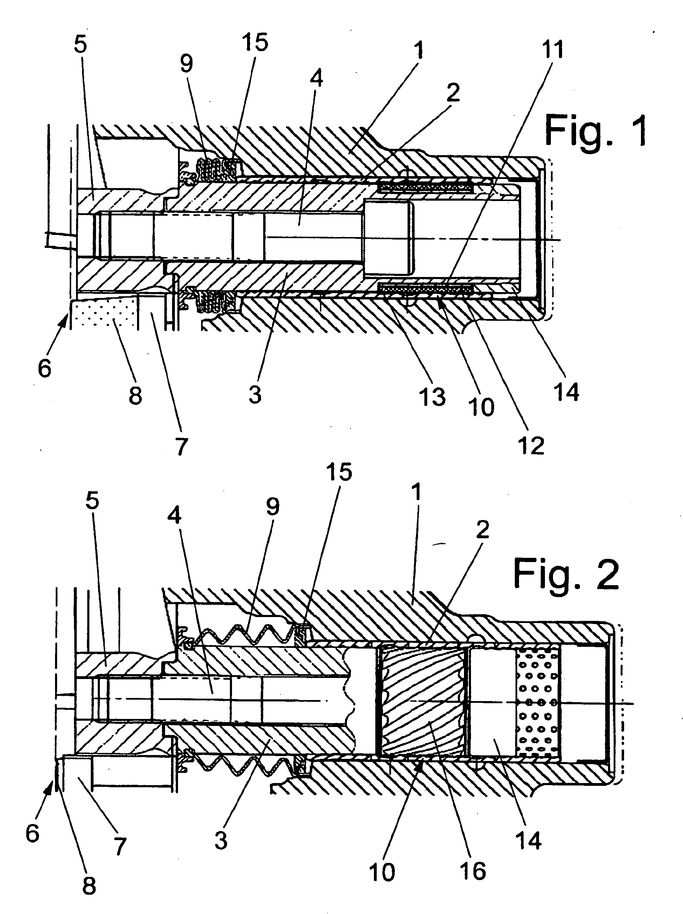

Die Figur 1 zeigt den genannten Teil der Scheibenbremse mit einem unbenutzten Bremsbelag 6, der aus einer Belagträgerplatte 7 und einem damit verbundenen Reibbelag 8 besteht, wobei der Reibbelag seine maximale Dicke aufweist. In der Figur 2 hingegen ist der Reibbelag 8 als weitgehend abgenutzt erkennbar.

Der Führungsholm 3 ist in einer rohrförmigen Aufnahme des Bremssattels 1 gelagert, die als Gleitlager eine aus einem geeigneten Material bestehende Führungshülse 2 aufweist, die mit dem Bremssattel 1 fest verbunden ist und die auf dem Führungsholm 3 gleitet. Im übrigen ist der Führungsholm 3 mittels einer Schraube 4 mit dem Bremsträger 5 verschraubt.

Entsprechend der Erfindung weist der Führungsholm 3 des dargestellten Festlagers am Außenumfang einen radial elastisch verformbaren Abschnitt auf, der im Beispiel aus einer Dämpfungsbuchse 10 besteht.

Diese Dämpfungsbuchse 10 wird in diesem Beispiel gebildet aus einer Metallhülse 11 als Träger und einer darauf außenseitig befestigten elastischen Schicht 12, beispielsweise aus einem mit der Metallhülse verpressten Gummi.

Die Dämpfungsbuchse 10 ist von der dem Bremsbelag 6 abgewandten Seite her auf einen Ansatz des Führungsholms 3 aufgeschoben, der durch eine umlaufende Schulter 13 begrenzt ist, an der die Dämpfungsbuchse 10 zur Anlage kommt.

An das freie Ende dieses Ansatzes ist ein Verschlussring 14 angeschlossen, beispielsweise durch Verschrauben, der mit seiner der Dämpfungsbuchse 10 zugewandten Stirnseite ebenfalls einen Anschlag für die Dämpfungsbuchse 10 bildet. Bevorzugt ist der Abstand zwischen der Schulter 13 und der genannten Stirnseite des Verschlussringes 14 etwas größer als die Breite der Dämpfungsbuchse 10, so dass diese mit axialem Spiel auf dem Führungsholm 3 geführt ist. Vorzugsweise entspricht dieses Spiel dem halben Lüftspiel sprich Arbeitshub.

Im normalen Bremsbetrieb gleitet das Gleitlager bzw. die Führungshülse 2 auf der elastischen Schicht 12. Bei größeren aufzunehmenden Bremsmomenten verformt sich die elastische Schicht 12, so dass ein Kontakt zwischen der Führungshülse 2 und dem Führungsholm 3 im Übrigen hergestellt wird.

In der Figur 2 ist die Schicht 12 ungeschnitten dargestellt, so dass hier deren mit Schmiernuten 16 versehene Mantelfläche zu erkennen ist.

Die Dämpfungsbuchse 10 verhindert, bedingt durch die Eigenschaften der elastischen Schicht 12, Klappergeräusche während des Fahrbetriebs des Fahrzeuges, wozu ebenfalls ein Dämpfungsring 15 beiträgt, der vorzugsweise auch aus einem elastischen Material besteht.

Dieser Dämpfungsring 15 ist an dem dem Bremsbelag 6 zugewandten Endbereich des Führungsholms 3 vorgesehen und wird in Richtung des Bremsbelages 6 von einem Faltenbalg 9 eingehaust, der im Übrigen die Führungshülse 2 gegenüber dem Inneren der Scheibenbremse abschirmt und der einerseits am Führungsholm 3 und andererseits am Bremssattel 1 befestigt ist.

Während in der Figur 1 bei unverschlissenem Bremsbelag 6 der Faltenbalg 9 als gestaucht zu erkennen ist, ist er in der Figur 2 bei verschlissenem Bremsbelag 6, entsprechend des Verschiebeweges des Bremssattels 1 gestreckt.

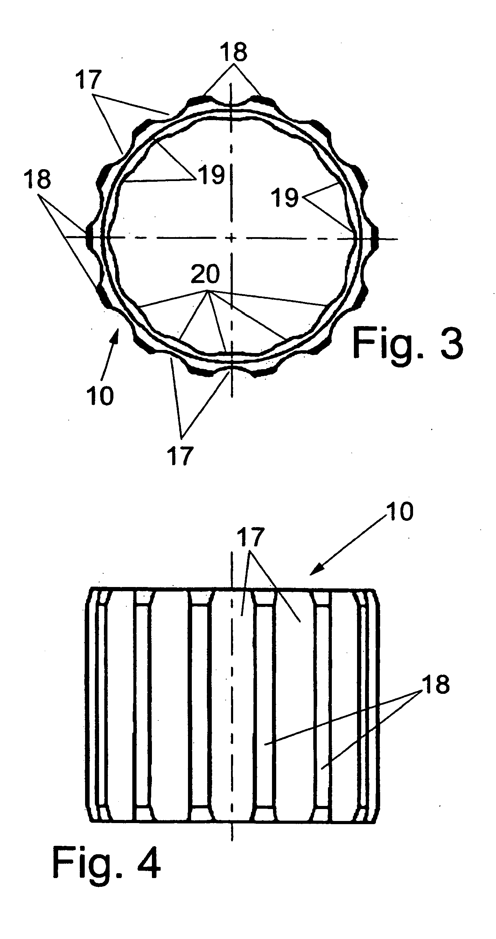

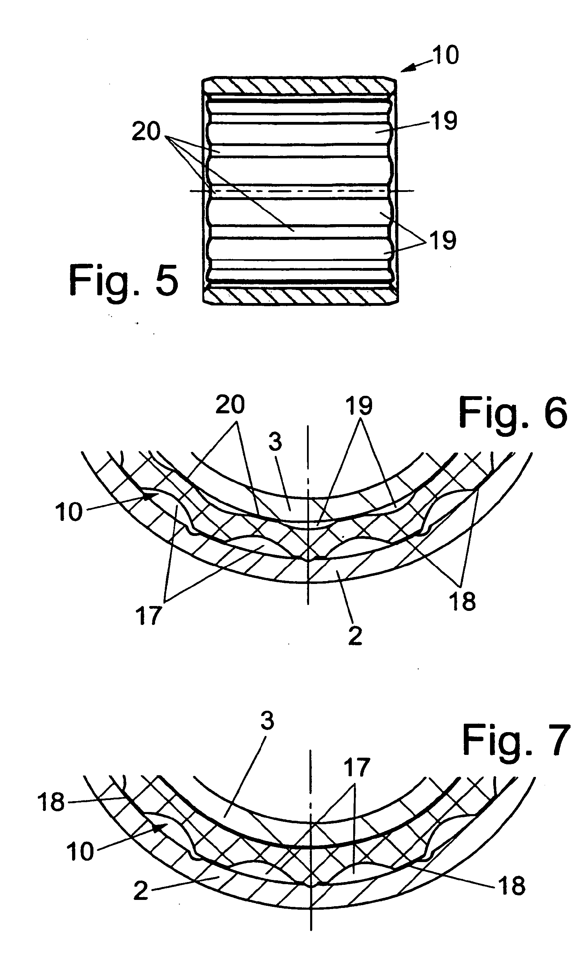

In den Figuren 3 bis 7 ist ein weiteres Ausführungsbeispiel der Dämpfungsbuchse 10 erkennbar, die auf ihrer äußeren Mantelfläche eine Vielzahl von gleichmäßig verteilten, gleichgroßen Nuten 17 aufweist, die sich axial über die gesamte Länge der Dämpfungsbuchse 10 erstrecken und jeweils durch Stege 18 begrenzt sind, die eine Anlagefläche zur Anlage an der Führungshülse 2 bilden (Figuren 6 und 7).

Die Innenseite der Dämpfungsbuchse 10 ist ebenfalls mit Nuten versehen, die dass Bezugszeichen 19 tragen und die sich gleichfalls axial über die gesamte Länge der Dämpfungsbuchse 10 erstrecken. Diese Nuten 19 sind im Beispiel in ihrer Breite gleichgroß bemessen und in gleichem Abstand über die Innenfläche verteilt. Begrenzt werden die Nuten 19 durch Stege 20, die sich am Führungsholm 3 abstützen.

Die innen liegenden Nuten 19 sind im Überdeckungsbereich der außen liegenden Stege 18 angeordnet und in ihrer Breite kleiner gehalten als die außen liegenden Nuten 17, deren Mittelachse auf einer radialen Ebene mit den Mittelachsen der äußeren Nuten 17 liegen, ebenso wie die äußeren Stege 18 mit ihren Mittellängsachsen auf einer radialen Ebene mit den Mittellängsachsen der innern Nuten 19 verlaufen.

In der Figur 6 ist eine Position dargestellt, in der die Dämpfungsbuchse 10 radial unbelastet ist. Es ist zu erkennen, dass die Breite der im Querschnitt bogenförmigen inneren Nuten 19 kleiner ist als die Breite der gleichfalls bogenförmigen äußeren Nuten 17, wobei der Krümmungsradius der inneren Nuten 19 und der äußeren Nuten 17 gleich ist, die Tiefe hingegen unterschiedlich, woraus sich eine unterschiedliche Breite ergibt.

Da dadurch die Dicke der Dämpfungsbuchse, die im Übrigen aus einem Elastomer bestehen kann, im Bereich der äußeren Stege 18 und der inneren Nuten 19 größer ist als die Dicke im Bereich der äußeren Nuten 17 und der inneren Stege 20, führt dies zu einem unterschiedlichen Progressionsverhalten, d.h. zu einem unterschiedlichen Verformen der Dämpfungsbuchse 10, entsprechend der Darstellung in Figur 7.

Hierbei ist aufgrund wirksamer radialer Kräfte die Dämpfungsbuchse 10 so verformt, dass die inneren Stege 20 und die benachbarten inneren Nuten 19 eine nahezu gleichmäßig gekrümmte Fläche bilden.

### Bezugszeichenliste

- 1: Bremssattel
- 2: Führungshülse
- 3: Führungsholm
- 4: Schraube
- 5: Bremsträger
- 6: Bremsbelag
- 7: Belagträgerplatte
- 8: Reibbelag
- 9: Faltenbalg
- 10: Dämpfungsbuchse
- 11: Metallhülse
- 12: Schicht
- 13: Schulter
- 14: Verschlussring
- 15: Dämpfungsring
- 16: Schmiernut

## Patentansprüche

1. Scheibenbremse, insbesondere für ein Nutzfahrzeug, mit einem eine Bremsscheibe umfassenden Bremssattel (1), der an einem Bremsträger (5) durch zwei Befestigungselemente, bezogen auf die Bremsscheibe, axial verschiebbar befestigt ist, wobei die Befestigungselemente jeweils einen mit dem Bremsträger (5) fest verbundenen Führungsholm (3) aufweisen, von denen einer in einem als Loslager und der andere in einem als Festlager ausgebildeten Gleitlager zur axialen Verschiebbarkeit des Bremssattels (1) geführt ist, **dadurch gekennzeichnet, dass** der Führungsholm (3) des Festlagers am Außenumfang einen radial elastisch verformbaren Abschnitt aufweist, an dem das zugeordnete Gleitlager unter Vorspannung bereichsweise anliegt.

2. Scheibenbremse nach Anspruch 1, **dadurch gekennzeichnet, dass** der elastisch verformbare Abschnitt bzw. die elastische Schicht (12) aus einem Gummi besteht.

3. Scheibenbremse nach Anspruch 1 oder 2, **dadurch gekennzeichnet, dass** der elastisch verformbare Abschnitt aus einer Dämpfungsbuchse (10) gebildet ist.

4. Scheibenbremse nach Anspruch 3, **dadurch gekennzeichnet, dass** die Dämpfungsbuche (10) auf einem Ansatz des Führungsholms (3) geführt ist.

5. Scheibenbremse nach Anspruch 4, **dadurch gekennzeichnet, dass** der Ansatz des Führungsholms (3) durch eine umlaufende Schulter (13) begrenzt ist.

6. Scheibenbremse nach Anspruche 5, **dadurch gekennzeichnet, dass** die Schulter (13) einen Verschiebeanschlag für die Dämpfungsbuchse (10) bildet.

7. Scheibenbremse nach einem der Ansprüche 3 bis 6, **dadurch gekennzeichnet, dass** die Dämpfungsbuchse (10) in radialer Belastungsrichtung ein progressives Dämpfungsverhalten aufweist.

8. Scheibenbremse nach Anspruch 7, **dadurch gekennzeichnet, dass** das progressive Dämpfungsverhalten über Teilbereiche unterschiedlich ist.

9. Scheibenbremse nach einem der Ansprüche 5 bis 8, **dadurch gekennzeichnet, dass** die Dämpfungsbuchse (10) innen- und/oder außenseitig Nuten (17, 19) aufweist, die beidseitig von Stegen (18, 20) begrenzt sind.

10. Scheibenbremse nach Anspruch 9, **dadurch gekennzeichnet, dass** zumindest ein Teil der Stege (18, 20) dicker und/oder breiter und/oder in ihrem Abstand zueinander unterschiedlich ist.

11. Scheibenbremse nach einem der Ansprüche 9 oder 10, **dadurch gekennzeichnet, dass** die Stege (18, 20) axial, umfänglich oder diagonal verlaufen.

12. Scheibenbremse nach einem der Ansprüche 9 bis 11, **dadurch gekennzeichnet, dass** die Nuten (17, 19) sich über die gesamte Länge des Dämpfungselementes (10) erstrecken.

13. Scheibenbremse nach einem der Ansprüche 9 bis 12, **dadurch gekennzeichnet, dass** die Stege (18, 20) Anlageflächen für das Gleitlager bzw. den Führungsholm (3) bilden.

14. Scheibenbremse nach einem der Ansprüche 9 bis 13, **dadurch gekennzeichnet, dass** die äußeren Nuten (17) und die inneren Nuten (19) in gleichem Winkelabstand zueinander verlaufen.

15. Scheibenbremse nach einem der Ansprüche 9 bis 14, **dadurch gekennzeichnet, dass** die Breiten der äußeren Nuten (17) gleich sind, ebenso wie die Breiten der inneren Nuten (19).

16. Scheibenbremse nach einem der Ansprüche 9 bis 15, **dadurch gekennzeichnet, dass** die Mittellängsachse jedes äußeren Steges (18) und die Mittellängsachse einer zugeordneten inneren Nut (19) in einer gemeinsamen radialen Ebene liegen, ebenso wie die Mittellängsachse jeder äußeren Nut (17) mit der Mittellängsachse eines zugeordneten inneren Steges (20).

17. Scheibenbremse nach einem der Ansprüche 9 bis 16, **dadurch gekennzeichnet, dass** die Breiten der inneren Nuten (19) kleiner sind als die Breiten der äußeren Nuten (17).

18. Scheibenbremse nach einem der Ansprüche 9 bis 17, **dadurch gekennzeichnet, dass** die äußeren Nuten (17) und/oder die inneren Nuten (19) im Querschnitt bogenförmig gestaltet sind.

19. Scheibenbremse nach einem der Ansprüche 9 bis 18, **dadurch gekennzeichnet, dass** der Querschnittsradius der inneren Nuten (19) und der äußeren Nuten (17) gleich ist.

20. Scheibenbremse nach einem der Ansprüche 9 bis 19, **dadurch gekennzeichnet, dass** die Dicke der Dämpfungsbuchse (10) im Bereich der äußeren Stege (18) und den zugeordneten inneren Nuten (19) unterschiedlich ist zur Dicke im Bereich der äußeren Nuten (17) und der zugeordneten inneren Stege (20).

21. Scheibenbremse nach einem der Ansprüche 3 bis 20, **dadurch gekennzeichnet, dass** an dem der Bremsscheibe abgewandten Ende des Führungsholms (3) ein Verschlussring (14) festgelegt ist, dessen eine Stirnseite ebenfalls einen Verschiebeanschlag für die Dämpfungsbuchse (10) bildet.

22. Scheibenbremse nach Anspruch 21, **dadurch gekennzeichnet, dass** der Abstand zwischen der Schulter (13) und der zugewandten Stirnseite des Verschlussringes (14) größer ist als die Breite der Dämpfungsbuchse (10).

23. Scheibenbremse nach einem der Ansprüche 21 oder 22, **dadurch gekennzeichnet, dass** das durch den größeren Abstand zwischen der Schulter (13) und dem Verschlussring (14), bezogen auf die Breite der Dämpfungsbuchse (10) gebildete Spiel etwa dem halben Lüftspiel entspricht.

24. Scheibenbremse nach einem der Ansprüche 9 bis 23, **dadurch gekennzeichnet, dass** die außenseitigen Nuten der Dämpfungsbuchse (10) als Schmiemuten (16) ausgebildet sind.

25. Scheibenbremse nach einem der vorhergehenden Ansprüche, **dadurch gekennzeichnet, dass** an dem der Bremsscheibe zugewandten Endbereich des Führungsholm (3) ein Dämpfungsring (15) angeordnet ist, der aus einem Dämpfungsmaterial, vorzugsweise einem elastischen Material besteht.

26. Scheibenbremse nach Anspruch 25, **dadurch gekennzeichnet, dass** der Dämpfungsring (15) im Innern eines Faltenbalges (9) angeordnet ist, der einerseits am Führungsholm (3) und andererseits am Bremssattel (1) befestigt ist.

## Claims

1. A disk brake, in particular for a commercial vehicle, having a brake caliper (1) which encloses a brake disk and is fastened axially displaceably in relation to the brake disk to a brake carrier (5) by two fastening elements, the fastening elements having in each case one guide spar (3) which is connected fixedly to the brake carrier (5), of which one is guided in a sliding bearing which is configured as a floating bearing and the other is guided in a sliding bearing which is configured as a locating bearing for the axial displaceability of the brake caliper (1), **characterized in that** the guide spar (3) of the locating bearing has, on the outer circumference, a radially elastically deformable section, against which the associated sliding bearing bears in regions.

2. A disk brake as claimed in claim 1, **characterized in that** the elastically deformable section or the elastic layer (12) is composed of a rubber.

3. A disk brake as claimed in claim 1 or 2, **characterized in that** the elastically deformable section is formed from a damping bush (10).

4. A disk brake as claimed in claim 3, **characterized in that** the damping bush (10) is guided on a projection of the guide spar (3).

5. A disk brake as claimed in claim 4, **characterized in that** the projection of the guide spar (3) is delimited by a circumferential shoulder (13).

6. A disk brake as claimed in claim 5, **characterized in that** the shoulder (13) forms a movement stop for the damping bush (10).

7. A disk brake as claimed in one of claims 3 to 6, **characterized in that** the damping bush (10) has a progressive damping characteristic in the radial loading direction.

8. A disk brake as claimed in claim 7, **characterized in that** the progressive damping characteristic is different over part regions.

9. A disk brake as claimed in one of claims 3 to 8, **characterized in that** the damping bush (10) has on the inside and/or the outside grooves (17, 19) which are delimited on either side by webs (18, 20).

10. A disk brake as claimed in claim 9, **characterized in that** at least one part of the webs (18, 20) is thicker and/or wider and/or at a different spacing from one another.

11. A disk brake as claimed in one of claims 9 or 10, **characterized in that** the webs (18, 20) run axially, circumferentially or diagonally.

12. A disk brake as claimed in one of claims 9 to 11, **characterized in that** the grooves (17, 19) extend over the entire length of the damping element (10).

13. A disk brake as claimed in one of claims 9 to 12, **characterized in that** the webs (18, 20) form contact faces for the sliding bearing and the guide spar (3).

14. A disk brake as claimed in one of claims 9 to 13, **characterized in that** the outer grooves (17) and the inner grooves (19) run at an identical angular spacing from one another.

15. A disk brake as claimed in one of claims 9 to 14, **characterized in that** the widths of the outer grooves (17) are identical, as are the widths of the inner grooves (19).

16. A disk brake as claimed in one of claims 9 to 15, **characterized in that** the center longitudinal axis of each outer web (18) and the center longitudinal axis of an associated inner groove (19) lie in a common radial plane, as do the center longitudinal axis of each outer groove (17) and the center longitudinal axis of an associated inner web (20).

17. A disk brake as claimed in one of claims 9 to 16, **characterized in that** the widths of the inner grooves (19) are smaller than the widths of the outer grooves (17).

18. A disk brake as claimed in one of claims 9 to 17, **characterized in that** the outer grooves (17) and/or the inner grooves (19) are of arcuate design in cross section.

19. A disk brake as claimed in one of claims 9 to 18, **characterized in that** the cross-sectional radius of the inner grooves (19) and the outer grooves (17) is identical.

20. A disk brake as claimed in one of claims 9 to 19, **characterized in that** the thickness of the damping bush (10) in the region of the outer webs (18) and the associated inner grooves (19) is different than the thickness in the region of the outer grooves (17) and the associated inner webs (20).

21. A disk brake as claimed in one of claims 3 to 20, **characterized in that** a closure ring (14) is fixed at the end of the guide spar (3) which faces away from the brake disk, one end side of said closure ring (14) also forming a movement stop for the damping bush (10).

22. A disk brake as claimed in claim 21, **characterized in that** the spacing between the shoulder (13) and the facing end side of the closure ring (14) is greater than the width of the damping bush (10).

23. A disk brake as claimed in one of claims 21 or 22, **characterized in that** the play which is formed by the greater spacing between the shoulder (13) and the closure ring (14) in relation to the width of the damping bush (10) corresponds to approximately half the air play.

24. A disk brake as claimed in one of claims 9 to 23, **characterized in that** the outside grooves of the damping bush (10) are configured as lubricating grooves (16).

25. A disk brake as claimed in one of the preceding claims, **characterized in that** a damping ring (15) which is composed of a damping material, preferably an elastic material, is arranged at the end region of the guide spar (3) which faces the brake disk.

26. A disk brake as claimed in claim 25, **characterized in that** the damping ring (15) is arranged in the interior of a folding bellows (9) which is fastened on one side to the guide spar (3) and on the other side to the brake caliper (1).

## Revendications

1. Frein à disque, notamment pour un véhicule utilitaire, comprenant un étrier (1) de frein, qui comprend un disque de frein et qui est fixé, en pouvant coulisser axialement par rapport au disque de frein, sur un support (5) de frein par deux éléments de fixation, les éléments de fixation ayant respectivement un longeron (3) de guidage relié rigidement au support (5) de frein, l'un d'entre eux étant guidé pour que l'étrier (1) de frein puisse coulisser, axialement dans un palier lisse constitué en palier fixe, **caractérisé en ce que** le longeron (3) de guidage du palier fixe a sur le pourtour extérieur une section déformable élastiquement radialement, à laquelle s'applique par endroit avec pré-contrainte le palier lisse associé.

2. Frein à disque suivant la revendication 1, **caractérisé en ce que** la section déformable élastiquement ou la couche (12) élastique est en caoutchouc.

3. Frein à disque suivant la revendication 1 ou 2, **caractérisé en ce que** la section déformable élastiquement est formée d'une douille (10) d'amortissement.

4. Frein à disque suivant la revendication 3, **caractérisé en ce que** la douille (10) d'amortissement est guidée sur un prolongement du longeron (3) de guidage.

5. Frein à disque suivant la revendication 4, **caractérisé en ce que** le prolongement du longeron (3) de guidage est délimité par un épaulement (13) faisant le tour.

6. Frein à disque suivant la revendication 5, **caractérisé en ce que** l'épaulement (13) forme une butée de coulissement sur la douille (10) d'amortissement.

7. Frein à disque suivant l'une des revendications 3 à 6, **caractérisé en ce que** la douille (10) d'amortissement a un comportement d'amortissement progressif dans la direction radiale de charge.

8. Frein à disque suivant la revendication 7, **caractérisé en ce que** le comportement d'amortissement progressif est différent sur des zones partielles.

9. Frein à disque suivant l'une des revendications 3 à 8, **caractérisé en ce que** la douille (10) d'amortissement a du côté intérieur et/ou du côté extérieur des rainures (17, 19) qui sont délimitées des deux côtés par des nervures (18, 20).

10. Frein à disque suivant la revendication 9, **caractérisé en ce que** au moins une partie des nervures (18, 20) est plus épaisse et/ou plus large et/ou leurs distances mutuelles sont différentes.

11. Frein à disque suivant l'une des revendications 9 ou 10, **caractérisé en ce que** les nervures (18, 20) s'étendent axialement en faisant le tour ou en diagonale.

12. Frein à disque suivant l'une des revendications 9 à 11, **caractérisé en ce que** les rainures (17, 19) s'étendent sur toute la longueur de l'élément (10) d'amortissement.

13. Frein à disque suivant l'une des revendications 9 à 12, **caractérisé en ce que** les nervures (18, 20) forment des surfaces de contact pour le palier lisse ou pour le longeron (3) de guidage.

14. Frein à disque suivant l'une des revendications 9 à 13, **caractérisé en ce que** les rainures (17) extérieures et les rainures (19) intérieures s'étendent en ayant la même distance angulaire les unes par rapport aux autres.

15. Frein à disque suivant l'une des revendications 9 à 14, **caractérisé en ce que** les largeurs des rainures (17) extérieures sont égales, tout comme les largeurs des rainures (19) intérieures.

16. Frein à disque suivant l'une des revendications 9 à 15, **caractérisé en ce que** l'axe longitudinal médian de chaque nervure (18) extérieure et l'axe longitudinal médian d'une nervure (19) intérieure associée est dans un plan radial commun, tout comme l'axe longitudinal médian de chaque rainure (17) extérieure, avec l'axe longitudinal médian d'une rainure (20) intérieure associée.

17. Frein à disque suivant l'une des revendications 9 à 16, **caractérisé en ce que** les largeurs des rainures (19) intérieures sont plus petites que les largeurs des rainures (17) extérieures.

18. Frein à disque suivant l'une des revendications 9 à 17, **caractérisé en ce que** les rainures (17) extérieures et/ou les rainures (19) intérieures sont en forme d'arc en section transversale.

19. Frein à disque suivant l'une des revendications 9 à 18, **caractérisé en ce que** le rayon, en section transversale, des rainures (19) intérieures est égale à celui des rainures (17) extérieures.

20. Frein à disque suivant l'une des revendications 9 à 19, **caractérisé en ce que** l'épaisseur de la douille (10) d'amortissement est, dans la zone des nervures (18) extérieures et des rainures (19) intérieures associées, différente de l'épaisseur dans la zone des rainures (17) extérieures et des nervures (20) intérieures associées.

21. Frein à disque suivant l'une des revendications 3 à 20, **caractérisé en ce que** qu'à l'extrémité du longeron (3) de guidage, éloignée du disque de frein, est fixé un anneau (14) de fermeture, dont un côté frontal forme également une butée limitant le coulissement de la douille (10) d'amortissement.

22. Frein à disque suivant la revendication 21, **caractérisé en ce que** la distance entre l'épaulement (13) et le côté frontal tourné vers lui de l'anneau (14) de fermeture est plus grande que la largeur de la douille (10) d'amortissement.

23. Frein à disque suivant la revendication 21 ou 22, **caractérisé en ce que** le jeu formé par la distance plus grande entre l'épaulement (13) et l'anneau (14) de fermeture, rapporté à la largeur de la douille (10) d'amortissement, correspond à peu près à la moitié du jeu d'air.

24. Frein à disque suivant l'une des revendications 9 à 23, **caractérisé en ce que** les rainures du côté extérieures de la douille (10) d'amortissement sont constituées en rainures (16) de lubrification.

25. Frein à disque suivant l'une des revendications précédentes, **caractérisé en ce que**, sur la zone d'extrémité du longeron (3) de guidage, qui est tournée vers le disque de frein, est disposé un anneau (15) d'amortissement, qui est en un matériau d'amortissement, de préférence en un matériau élastique.

26. Frein à disque suivant la revendication 25, **caractérisé en ce qu'**anneau (15) d'amortissement est disposé à l'intérieur d'un soufflet (9) qui est fixé d'une part au longeron (3) de guidage et d'autre part à l'étrier (1) de frein.
